# EUROPÄISCHE PATENTSCHRIFT

(11) **EP 1 331 836 B1**
(45) Veröffentlichungstag und Bekanntmachung des Hinweises auf die Patenterteilung: **22.07.2009**
(21) Anmeldenummer: 03001466.6
(22) Anmeldetag: 23.01.2003
(51) Int. Cl.: H05B 3/34, H05B 1/02

(54) **Elektrisch beheizbare Wärmevorrichtung mit einem schmiegsamen Heizkörpper**
Electrical heatable warming device with flexible heatable assembly
Dispositif à chauffer chauffable électriquement possédant un corps de chauffe flexible

(30) Priorität: 25.01.2002 DE 10203197
(43) Veröffentlichungstag der Anmeldung: 30.07.2003
(73) Patentinhaber: Beurer GmbH, 89077 Ulm (DE)
(72) Erfinder: Merk, Ernst, 89264 Weissenhorn (DE)
(74) Vertreter: Dr. Weitzel & Partner

(56) Entgegenhaltungen:
- EP-A- 0 910 227

## Beschreibung

Die vorliegende Erfindung betrifft eine elektrisch beheizbare Wärmevorrichtung mit einem schmiegsamen Heizkörper und mindestens einem darauf angeordneten Heizelement. Das mindestens eine Heizelement weist zwei durch eine schmelzfähige Zwischenisolierung voneinander elektrisch getrennte Widerstands-Heizdrähte auf und ist über mindestens ein Sicherungselement mittels einer Verbindungsleitung mit einer vom Heizkörper entfernt angeordneten Schaltungsanordnung zum Anschluss an eine Spannungsversorgung verbunden.

Eine derartige Wärmevorrichtung ist beispielsweise aus der EP 0 566 302 A1 bekannt. Diese Wärmevorrichtung, insbesondere eine Heizdecke, weist ein Heizelement auf, welches einen inneren Heizdraht und einen äußeren Heizdraht aufweist, welche durch eine Isolationsschicht elektrisch voneinander getrennt sind. Ein Ende des Heizelements ist mit einer Schaltungsanordnung zum Anschluss an eine Spannungsversorgung verbunden. Die von der Spannungsversorgung abgewandten freien Enden des Heizelements sind über eine Gleichrichterdiode miteinander verbunden. Über diese Diode wird nur eine Halbwelle der elektrischen Wechselspannung und damit ein entsprechender Effektivwert des Heizstromes durchgelassen. Wenn zwischen den beiden Heizdrähten ein Kurzschluss entsteht, wird dadurch die Diode überbrückt und eine Schmelzsicherung spricht auf den erhöhten Heizstrom an und schaltet die Stromzufuhr ab. Zu einem der Heizdrähte ist eine Diodenanordnung parallel geschaltet, deren Durchlassrichtung entgegengesetzt der Durchlassrichtung der Überbrückungsdiode ist. Außerhalb der Decke ist das Heizelement über eine lösbare Steckkupplung mittels einer Verbindungsleitung an einer entfernt angeordneten Schaltungsanordnung angeschlossen.

Die EP 0 910 227 A1 beschreibt ebenfalls eine bekannte Wärmevorrichtung mit einem aus zwei Widerstands-Heizdrähten aufgebauten Heizelements. Die Widerstandsheizdrähte sind an einem Ende mit einer Schaltungsanordnung verbunden. Die von der Schaltungsanordnung abgewandten Enden der Widerstandsheizdrähte sind unmittelbar miteinander verbunden. Das Heizelement ist mehrfach gewunden mit einander benachbarten Abschnitten auf der Heizdecke angeordnet, so dass bei einer örtlichen Überhitzung die Isolation an mehreren Stellen durchschmilzt. Dies führt zu einem erhöhten Stromfluss in dem Heizelement, wodurch wiederum eine Schmelzsicherung zum Durchschmelzen gebracht wird. Dies führt zu einer Unterbrechung des zugefügten Stromes.

Bei den bekannten Wärmevorrichtungen ist vorgesehen, die Schmelzsicherung innerhalb der Schaltungsanordnung vorzusehen, die im Falle eines durch einen Kurzschluss verursachten erhöhten Stromflusses durchschmilzt und somit den Benutzer vor Verbrennungen oder Stromschlägen schützt. Ein Durchschmelzen des Sicherungselements hat jedoch meist zur Folge, dass die Schaltungsanordnung zerstört oder zumindest erheblich beschädigt wird. Meist sind die Schäden irreparabel, so dass die gesamte Wärmevorrichtung entsorgt werden muss. Die belastet die Umwelt.

Darüber hinaus kommt es bei den bekannten Wärmevorrichtungen, bei denen die Schaltungsanordnung über eine Verbindungsleitung vom Heizkörper entfernt angeordnet ist, im Falle eines Kurzschlusses zu einem erhöhten Stromfluss innerhalb der Verbindungsleitung, was eine zusätzliche Gefahrenquelle darstellt.

Der vorliegenden Erfindung liegt die Aufgabe zugrunde, eine eingangs genannte Wärmevorrichtung dahingehend zu verbessern, dass im Falle eines auf dem Heizkörper auftretenden Kurzschlusses die Gefährdung des Benutzers weitgehend ausgeschlossen und die Schaltungsanordnung nicht beschädigt wird. Darüber hinaus soll die erfindungsgemäße Wärmevorrichtung einfach und preisgünstig herzustellen sein.

Diese Aufgabe wird durch die Merkmale der Patentansprüche 1, 3 und 5 gelöst. Die Unteransprüche betreffen vorteilhafte Weiterbildungen.

Demgemäss ist auf dem Heizleiter eine Anschlussplatte zum elektrischen Verbinden des mindestens einen Heizelements mit der Verbindungsleitung und wiederum auf der Anschlussplatte das mindestens eine Sicherungselement angeordnet. Die zwei Widerstands-Heizdrähte jedes Heizelements sind mit dem Sicherungselement in Reihe geschaltet.

Mit der Maßnahme, das bei einem auftretenden Kurzschluss durchschmelzende Sicherungselement direkt auf dem Heizkörper vorzusehen, kann die entfernt angeordnete Schaltungsanordnung, zum Beispiel ein Schnurzwischenschalter, im Kurzschluss-Fall weiter verwendet werden. Dies spart Kosten bei der Instandsetzung und schont die Umwelt, da bei der Entsorgung weniger Teile in den Hausmüll gelangen.

In vorteilhafter Weise weist die Anschlussplatte eine Trägerplatte auf, an der die zwei Widerstands-Heizdrähte jeweils mittels an der Trägerplatte angebrachten elektrisch leitenden Klemmelementen fixiert und kontaktiert sind. Dadurch ist die Herstellung unaufwendig. Zudem sind Leitungselemente vorgesehen, welche eine elektrisch leitende Verbindung zwischen den Widerstands-Heizdrähten, dem Sicherungselement und den Adern der Verbindungsleitung herstellen. Es lässt sich je nach Schaltungsauslegung eine geeignete elektrische Verbindung zwischen den einzelnen Komponenten herstellen.

Gemäß einer weiteren Ausführungsform der Erfindung ist auf dem Heizkörper ein aus zwei Widerstands-Heizdrähten gebildetes Heizelement angeordnet. Die Schaltungsanordnung weist dabei eine zweistufige Schalteinheit auf. Diese ist in einem zwischen einem Versorgungsspannungsanschluss und dem verbindungsleitungsseitigen Anschluss des einen Widerstands-Heizdrahtes liegenden Leitungsabschnitt angeordnet. Die zweistufige Schalteinheit besteht aus einer Parallelschaltung eines ersten Schaltelements im ersten Parallelzweig und einer aus einem zweiten Schaltelement und einer Diode gebildeten Reihenschaltung im zweiten Parallelzweig. In besonders vorteilhafter Weise ist bei dieser Ausführungsform die Verbindungsleitung zweiadrig ausgebildet. Dies erlaubt eine Miniaturisierung gegenüber bisherigen Ausführungen, da eine nur 2-polige Steckkupplung verwendet werden kann. Zudem erlaubt die zweistufige Schalteinheit das Beheizen des Heizkörpers auf unterschiedliche Temperaturen.

Gemäß noch einer weiteren bevorzugten Ausführungsform können auf dem Heizkörper zwei Heizelemente angeordnet sein. Das zweite Heizelement lässt sich zusätzlich bzw. separat zum ersten Heizelement beheizen. Jedes der Heizelemente ist aus jeweils zwei Widerstands-Heizdrähten gebildet. Mit einer derartigen Heizelement-Anordnung ist es möglich, zum Beispiel bei einem Wärmeunterbett zu einem dem Oberkörper des Benutzers zugeordneten beheizbaren Oberteil ein zusätzliches, separat beheizbares Fußteil vorzusehen.

Um die Schaltungsanordnung, beziehungsweise die Verbindungsleitung auf einfache Weise vom Heizkörper zu trennen, kann die Verbindungsleitung unmittelbar oder über ein Kordelstück mit einer lösbaren Steckkupplung, welche die notwendigen Anschlusskontakte aufweist, verbunden sein.

Ein Steckerteil der Steckkupplung kann direkt auf dem Heizkörper oder der Anschlussplatte angeordnet sein. Wenigstens ein Sicherungselement kann hierbei direkt in oder an dem heizkörperseitigen oder verbindungsleitungsseitigen Steckerteil der Steckkupplung angebracht sein. Auf diese Weise lässt sich einerseits eine einfache Verbindung zwischen Heizkörper und Verbindungsleitung herstellen, andererseits bietet der heizkörperseitige oder verbindungsleitungsseitige Steckerteil eine geschützte Unterbringung des mindestens einen Sicherungselements. Das Sicherungselement ist nicht Gegenstand der Erfindung.

Bei einer Heizelement-Anordnung gemäß des vorstehenden Ausführungsbeispiels kann die Verbindungsleitung zwar 3-adrig ausgebildet sein, jedoch ist die zugeordnete Schaltungsanordnung einfach und kostensparend aufgebaut. So kann die Schaltungsanordnung in einem zwischen einem ersten Versorgungsspannungsanschluss und dem verbindungsleitungsseitigen Anschluss des ersten Widerstands-Heizdrahts des ersten Heizelements liegenden Leitungsabschnitt eine erste Schalteinheit zum Schalten des ersten Heizelements aufweisen, welche aus einer Parallelschaltung eines ersten Schaltelements im ersten Parallelzweig und einer auf einem zweiten Schaltelement und einer Diode gebildeten Reihenschaltung im zweiten Parallelzweig besteht. Um den Fußteil separat zu beheizen, weißt die Schaltungsanordnung in einem zwischen dem ersten Versorgungsspannungsanschluss und dem zugeordneten Eingangsanschluss des ersten Widerstands-Heizdrahts des zweiten Heizelements liegenden Leitungsabschnitt eine zweite Schalteinheit zum Schalten des zweiten Schaltelements auf, welche aus einer Parallelschaltung eines dritten Schaltelements im ersten Parallelzweig und einer aus dem zweiten Schaltelement und einer Diode gebildeten Reihenschaltung im zweiten Parallelzweig besteht. Mit diesem einfachen Schaltungsaufbau kann eine sichere und bauteilsparende Wärmevorrichtung mit separat beheizbaren Wärmezonen realisiert werden.

Gemäß noch einer weiteren bevorzugten Ausführungsform sind auf dem Heizkörper ebenfalls zwei Heizelemente angeordnet, welche jeweils aus zwei Widerstands-Heizdrähten gebildet sind. Das zweite Heizelement lässt sich separat zum ersten Heizelement mittels des Verfahrens der Trennung von Netzhalbwellen beheizen. In dieser Ausführungsform ist die Verbindungsleitung zweiadrig ausgebildet, was wiederum zur Miniaturisierung insbesondere der verwendeten Steckverbindung beiträgt.

Gemäß dieser Ausführungsform weist die Schaltungsanordnung in einem zwischen einem ersten Versorgungsspannungsanschluss und dem zugeordneten Anschluss des Heizkörpers liegenden Leitungsabschnitt eine zweistufige Schalteinheit bestehend aus einer Parallelschaltung einer aus einem ersten Schaltelement und einer ersten Diode gebildeten Reihenschaltung im ersten Parallelzweig und einer aus einem zweiten Schaltelement und einer zur ersten Diode antiparallel geschalteten zweiten Diode gebildeten Reihenschaltung im zweiten Parallelzweig auf. In dem zwischen dem besagten Anschluss und dem verbindungsleitungsseitigen Anschluss des ersten Widerstands-Heizdrahts des ersten Heizelements liegenden Leitungsabschnitt ist eine erste Diodenanordnung angeordnet. In dem zwischen dem besagten Anschluss und dem verbindungsleitungsseitigen Anschluss des ersten Widerstands-Heizdrahts des zweiten Heizelements liegenden Leitungsabschnitts ist eine zur Durchlassrichtung der ersten Diodenanordnung entgegengesetzt gerichtete zweite Diodenanordnung angeordnet. Mit dieser Maßnahme lassen sich die beiden Heizelemente durch Trennung der Netzhalbwellen beheizen.

Um den Schaltungsaufwand innerhalb der Schaltungsanordnung, welche beispielsweise ein kleinbauender Schnurzwischenschalter sein kann, zu begrenzen, können die erste und zweite Diodenanordnung im heizkörperseitigen oder verbindungsleitungsseitigen Steckerteil der Steckkupplung angeordnet sein.

Um den Fußteil separat beheizen zu können ist eine zusätzliche dritte Schaltstufe der Schalteinheit vorgesehen. Diese dritte Schaltstufe wird durch einen dritten Parallelzweig gebildet, welcher aus einer Reihenschaltung eines dritten Schaltelements und eines mit einer Leistungsreduzierungsstufe verschalteten Triacs bzw. Zweiweg-Tyristors aufgebaut ist. Anstelle des Triacs bzw. Zweiweg-Tyristors kann ein gleich oder ähnlich wirkender elektrischer, elektronischer oder elektromechanischer Schalter verwendet werden.

Um einen besonders sicheren und einfachen Schaltungsaufbau bezüglich des Sicherungselements zu realisieren, kann der verbindungsleitungsseitige Anschluss des zweiten Widerstandsheizdrahtes des ersten Heizelements und der verbindungsleitungsseitige Anschluss des zweiten Widerstands-Heizdrahts des zweiten Heizelements miteinander verbunden sein und mit dem zweiten Versorgungsspannungsanschluss einen Leitungsabschnitt bilden, in welchem das Sicherungselement liegt.

Für eine zuverlässige Funktion bei möglichst einfachem Aufbau trägt die Maßnahme bei, dass das oder jedes Heizelement als eine Doppelkordel mit dem einen Widerstands-Heizdraht als Innenleiter und dem anderen Widerstands-Heizdraht als Außenleiter ausgebildet ist.

Gemäß einer besonders bevorzugten Ausführungsform, bei welcher zwei Heizelemente auf dem Heizkörper angeordnet sind, ist das erste Heizelement als eine erste Doppelkordel und das zweite Heizelement als eine zweite Doppelkordel ausgebildet. Die jeweils freien Enden der Doppelkordeln weisen ein Kurzschlussverbindungselement auf, bzw. sind direkt miteinander verbunden.

Das Kurzschlussverbindungselement kann in der Steckkupplung oder an der Anschlussplatte verlegt sein. Beide Enden der Doppelkordel können somit durch ein einheitliches Kontaktierungsverfahren auf nur einer Trägerplatte zusammengeführt werden, so dass auch die Verlegung des Heizelements bzw. der Heizelemente erleichtert wird. Durch Fixierung beider Heizleiterenden auf einer Anschlussplatte wird vermieden, dass das Heizelement bzw. die Heizelemente nach mehrfacher Benutzung allzu sehr wandern und sich Gebiete ausbilden, in denen die Heizelemente sich zu "Nestern" zusammenschieben. So stellt die Steckkupplung oder die Anschlussplatte gleichzeitig eine Zugentlastung für die Doppelkordel dar.

Das Kurzschlussverbindungselement kann auf einfache weise dadurch gebildet werden, dass eine leitende Verbindung zwischen dem den als Innenleiter ausgebildeten Widerstands-Heizleiter fixierenden und kontaktierenden Klemmelement und dem den als Außenleiter ausgebildeten Widerstands-Heizleiter fixierenden und kontaktierenden Klemmelement gebildet ist.

Um beispielsweise einen beheizbaren Oberteil und separat beheizbaren Fußteil eines Wärmeunterbetts zu realisieren, ist die erste Doppelkordel in einem ersten Heizbereich, welcher den Oberteil darstellt, auf dem Heizkörper und die zweite Doppelkordel in einem vom ersten Heizbereich getrennten zweiten Heizbereich, welcher den Fußteil darstellt, auf dem Heizkörper angeordnet.

Um einen möglichst guten flächigen Schutz der schmiegsamen Wärmevorrichtung sicherzustellen ist die oder jede Doppelkordel im wesentlichen mehrfach gewunden auf dem Heizkörper angeordnet, wobei parallel zueinander verlaufende Doppelkordelbereiche gebildet sind. Durch eine derartige Anordnung wird unter anderem das Auftreten elektromagnetischer Felder reduziert.

Gemäß einer bevorzugten Ausführungsform ist jedes Heizelement gemäß einem Verlegeschema angeordnet, bei welchem sich die parallel zueinander verlaufenden Doppelkordelbereiche der oder jeder Doppelkordel zumindest teilweise parallel zur Längserstreckungsrichtung des Heizkörpers, alternativ senkrecht zur Längserstreckungsrichtung des Heizkörpers erstrecken.

Nachfolgend werden Ausführungsformen der erfindungsgemäßen Wärmevorrichtung anhand der beigefügten Zeichnungen näher erläutert:

Es zeigen:
- Figur 1: einen schematischen Schaltplan einer erfindungsgemäßen Wärmevorrichtung gemäß einer ersten Ausführungsform, welche ein Heizelement auf dem Heizkörper aufweist;
- Figur 2: einen schematischen Schaltplan einer erfindungsgemäßen Wärmevorrichtung gemäß einer zweiten Ausführungsform, welche zwei Heizelemente auf dem Heizkörper aufweist und die Verbindungsleitung dreiadrig ausgeführt ist;
- Figur 3: einen schematischen Schaltplan einer erfindungsgemäßen Wärmevorrichtung gemäß einer dritten Ausführungsform, welche zwei Heizelemente auf dem Heizkörper aufweist und die Verbindungsleitung zweiadrig ausgeführt ist;
- Figur 4: eine schematische Draufsicht eines mit einem Heizelement versehenen Heizkörpers gemäß der in Figur 1 gezeigten ersten Ausführungsform;
- Figur 5: eine schematische Draufsicht eines mit zwei Heizelementen versehenen Heizkörpers gemäß der in Figur 2 gezeigten zweiten Ausführungsform;
- Figur 6: eine schematische Draufsicht eines mit zwei Heizelementen versehenen Heizkörpers gemäß der in Figur 3 gezeigten dritten Ausführungsform; und
- Figur 7: eine schematische Draufsicht einer Anschlussplatte zum Verbinden einer zweiadrigen Verbindungsleitung mit einem Heizelement gemäß der in Figur 1 gezeigten Ausführungsform.

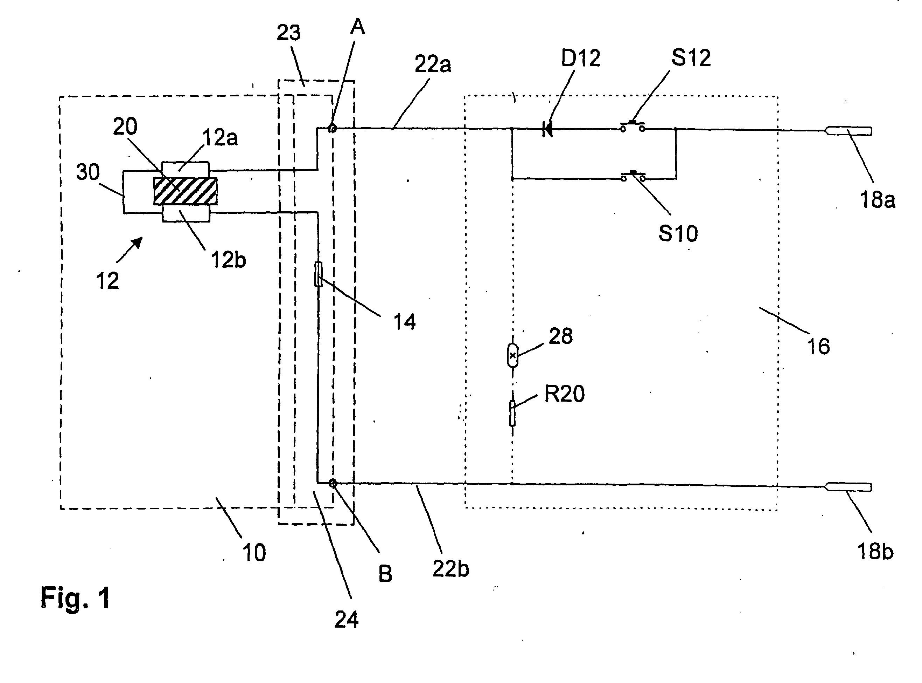

Figur 1 zeigt einen schmiegsamen Heizkörper 10, welcher aus einem flexiblen Trägermaterial, beispielsweise einem Kunststoff- oder Textilmaterial, hergestellt ist. Auf dem Heizkörper 10 ist ein Heizelement 12 angeordnet. Das Heizelement 12 besteht aus zwei Widerstands-Heizdrähten 12a und 12b, welche mittels einer schmelzfähigen Zwischenisolierung 20 voneinander elektrisch getrennt sind. Wie in Figur 1 nur schematisch angedeutet, ist das Heizelement 12 als eine Doppelkordel mit dem Widerstands-Heizdraht 12a als Innenleiter und dem Widerstands-Heizdraht 12b als Außenleiter ausgebildet. Das als Doppelkordel ausgebildete Heizelement 12 ist mehrfach gewunden mit einander benachbarten Abschnitten auf dem Heizkörper 10 angeordnet, so dass bei einer örtlichen Überhitzung die Zwischenisolierung 20 an mehreren Stellen durchschmilzt und ein Kurzschluss entsteht, welcher eine Erhöhung des Heizstromes zur Folge hat.

Für den Doppelkordelaufbau wird in der Praxis beispielsweise der Aufbau einer sogenannten Lanlitze gewählt. Bei einer derartigen Lanlitze werden mehrere verseilte Kunststoffträgerfäden mit Bewicklung aus flachgewalzten Widerstandsdrähten, die vornehmlich aus Kupfer bestehen, verwendet. Diese Lanlitze ist mit einer niedrigschmelzenden Zwischenisolation isoliert und mit einem weiteren Widerstandsdraht bewickelt. Zum Anschluss ist eine weitere Außenisolation aufgebracht.

Die freien Enden der Doppelkordel, bzw. die freien Enden des Widerstands-Heizdrahtes 12a und des Widerstands-Heizdrahtes 12b sind über ein Kurzschlussverbindungselement 30 bzw. direkt miteinander verbunden.

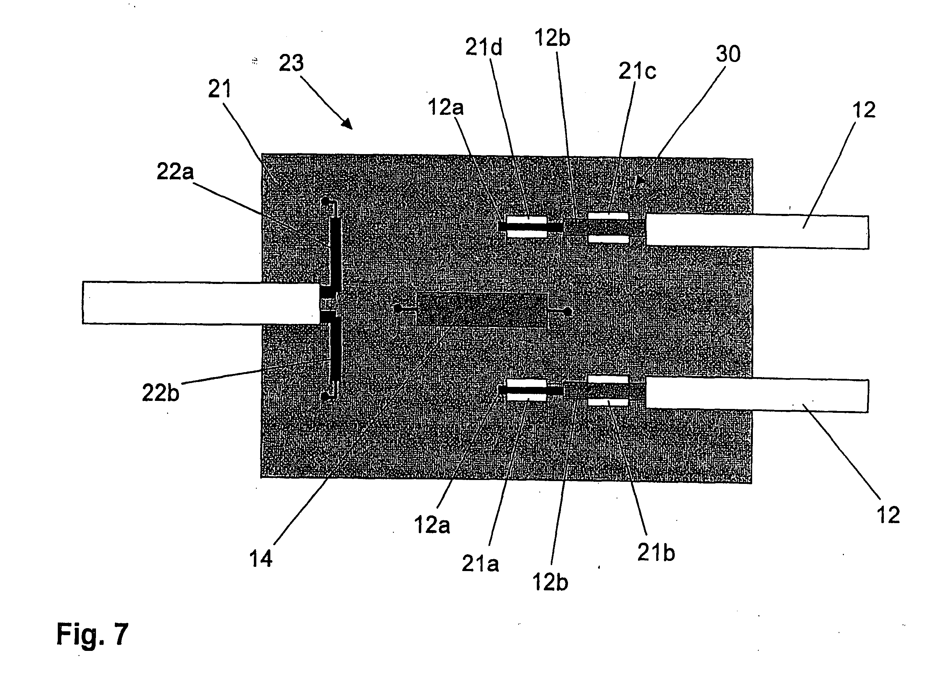

Das Kurzschlussverbindungselement 30 kann dabei auf einer (in Figur 7 näher gezeigten) Anschlussplatte 23 am Heizkörper 10 angebracht sein, in einer alternativen Anordnung jedoch beispielsweise auch in einem Steckerteil der Steckkupplung 24.

Um elektrisch beheizt werden zu können, sind die anschlussseitigen Enden der Widerstands-Heizleiter 12a und 12b mit Anschlusskontakten A und B verbunden. Diese Anschlusskontakte A und B sind in einem heizkörperseitigen Steckerteil einer lösbaren Steckkupplung 24 angeordnet. Zwischen dem Widerstands-Heizdraht 12b und dem Anschlusskontakt B ist innerhalb der lösbaren Steckkupplung ein Sicherungselement 14 angeordnet. Der Widerstandsheizdraht 12a bildet zusammen mit dem Widerstandsheizdraht 12b und dem Sicherungselement 14 somit eine Reihenschaltung.

Das Sicherungselement 14 ist als eine Glas-Schmelzsicherung bzw. Fuse ausgebildet. Alternativ kann das Sicherungselement jedoch auch als ein beispielsweise in Keramik gepackter Widerstanddraht, als Sicherungswiderstand, Halbleitersicherung, Leiterbahnsicherung oder dergleichen Stromsicherung ausgebildet sein. Eine derartige Stromsicherung wird normalerweise auf den Geräte-Nennstrom dimensioniert. Da jedoch Netzspannungsspitzen und Toleranzen der Überstromsicherungen auftreten können, kommt es bei einer derartigen Dimensionierung gelegentlich zu ungewolltem Auslösen des Sicherungselements. Falls es zwischen dem Widerstands-Heizdraht 12a und dem Widerstands-Heizdraht 12b aufgrund des Durchschmelzens der Zwischenisolierung 20 zu einem Kurzschluss kommt, kann der Geräte-Nennstrom um den Faktor 2 oder größer ansteigen. Dieser Stromanstieg ist in der Regel nicht ausreichend für das Auslösen des Sicherungselements 14. Durch die ansteigende Heizleistung aufgrund des Kurzschlusses entstehen jedoch zunehmend weitere Heizelement-Kurzschlüssen, wodurch der Gerätestrom ständig ansteigt. Wenn der Auslösestrom des Sicherungselements 14 erreicht ist, löst dieses aus, bzw. schmilzt durch.

Das Sicherungselement 14 ist direkt an der Anschlussplatte 23 auf dem Heizkörper 10 angeordnet, und zwar innerhalb des heizkörperseitigen Steckteils der Steckkupplung 24. Alternativ kann das Sicherungselement 14 auch im verbindungsleitungsseitigen Steckerteil untergebracht sein.

Ausgehend von den Anschlusskontakten A und B der Steckkupplung 24 führt eine zweiadrige Verbindungsleitung 22a und 22b zu einer Schaltungsanordnung 16. Die zweiadrige Verbindungsleitung 22a und 22b kann jedoch auch ohne Steckkupplung 24 mittels der Anschlussplatte 23 direkt mit dem Heizelement 12 verbunden sein. In diesem (in Figur 7 gezeigten) Fall ist das Sicherungselement 14 direkt auf der Anschlussplatte 23 angeordnet.

Die Schaltungsanordnung 16 kann beispielsweise ein sogenannter Schnurzwischenschalter sein, wie er beispielsweise bei Heizkissen um Einsatz kommt. Die Schaltungsanordnung 16 ist am anderen Ende mit einer Spannungsversorgung 18a, 18b verbunden.

In einem zwischen dem einen Versorgungsspannungsanschluss 18a und dem verbindungsleitungsseitigen Anschluss des ersten Widerstands-Heizdrahtes 12a, bzw. Anschlusskontakt A liegenden Leitungsabschnitt ist eine zweistufige Schalteinheit angeordnet. Diese zweistufige Schalteinheit ermöglicht das zweistufige Beheizen des Heizelements 12, wobei die Schalteinheit jeweils eine (nicht gezeigte) Schalterstellung für den Ausschaltezustand, für die erste Heizstufe und für die zweite Heizstufe aufweist. Die zweistufige Schalteinheit besteht aus einer Parallelschaltung eines ersten Schaltelements S10 im ersten Parallelzweig und einer aus einem zweiten Schaltelement S12 und einer Diode D12 gebildeten Reihenschaltung im zweiten Parallelzweig. Der Anschlusskontakt A ist über die Verbindungsader 22a mit der Schalteinheit verbunden. Der Anschlusskontakt B ist mit dem Versorgungsspannungsanschluss 12b verbunden.

Um den Schaltzustand der Schalteinheit dem Benutzer anzuzeigen, ist zwischen der Schalteinheit und dem zwischen dem Anschlusskontakt B und dem Versorgungsspannungsanschluss 18b gebildeten Leitungsabschnitt eine optische Anzeigeeinrichtung bestehend aus einer Reihenschaltung aus einem optischen Anzeigeelement 28 und eines Widerstands R20 angeordnet. Das optische Anzeigeelement 28 kann beispielsweise eine Glimmlampe, aber auch eine Leuchtdiode oder dergleichen Anzeigeeinheit sein, wobei jedoch die zusätzliche Verschaltung mit (nicht gezeigten) Vorwiderständen, Kondensatoren, Gleichrichterdioden, Spannungswandlern oder dergleichen elektrischen Bauteilen notwendig werden kann.

Die optische Anzeigeeinrichtung kann alternativ in der Steckkupplung 24 oder an der Anschlussplatte 23 untergebracht sein. Auch lässt sich der korrekte Stromfluss durch eine (nicht gezeigte) einfache Reihenschaltung einer Lampe mit dem Heizelement nach dem Prinzip der Spannungsaufteilung realisieren.

Die in Figur 1 gezeigte elektrisch beheizbare Wärmevorrichtung ist für den Einsatz bei Heizkissen, Wärmeunterbetten oder dergleichen schmiegsamen Wärmegeräten vorgesehen.

Nachfolgend werden weitere Ausführungsformen erfindungsgemäßer Wärmevorrichtungen beschrieben. Die vorstehend für die erste Ausführungsform dargelegten technischen Ausbildungen gelten im wesentlichen auch für die nachfolgend beschriebenen Ausführungsformen. Dies gilt insbesondere für den Aufbau des Heizkörpers, eines jeden Heizelements als Doppelkordel und die lokale Überhitzungserkennung auf dem Heizkörper mit Auslösen des Sicherungselements und dessen Aufbau.

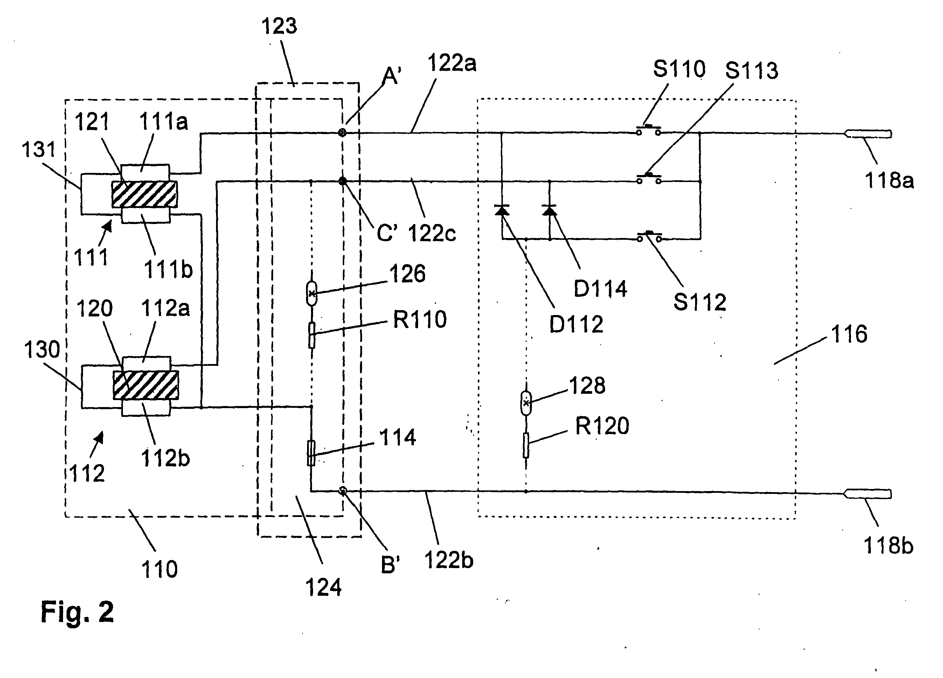

Figur 2 zeigt eine zweite Ausführungsform einer elektrisch beheizbaren Wärmevorrichtung. Auf einem schmiegsamen Heizkörper 110, welcher ähnlich dem in Figur 1 dargestellten Heizkörper 10 aufgebaut ist, sind zwei Heizelemente 111 und 112 angeordnet. Das erste Heizelement 111 ist ähnlich dem in Figur 1 dargestellten Heizelement 12 aufgebaut. Ein erster Widerstands-Heizdraht 111a wird durch eine Zwischenisolierung 121 von einem zweiten Widerstandsheizdraht 111b elektrisch getrennt. Das zweite Heizelement 112 besteht aus einem ersten Widerstands-Heizdraht 112a und einem zweiten Widerstands-Heizdraht 112b, welche wiederum durch eine schmelzfähige Zwischenisolierung 120 elektrisch voneinander getrennt sind. Beide Heizelemente 111 und 112 sind jeweils als eine Doppelkordel mit dem einen Widerstands-Heizdraht 111a bzw. 112a als Innenleiter und dem anderen Widerstands-Heizdraht 111b bzw. 112b als Außenleiter ausgebildet. Die jeweils freien Enden dieser Doppelkordeln sind jeweils durch ein an der Anschlussplatte 123 auf dem Heizkörper 110 oder von diesem entfernt, beispielsweise in der Steckkupplung 124 untergebrachten Kurzschlussverbindungselement 131 bzw. 130 bzw. direkt miteinander verbunden.

Auf der Anschlussplatte 123 auf dem Heizkörper 110 ist der heizkörperseitige Steckerteil einer lösbaren Steckkupplung 124 mit Anschlusskontakten A' B' und C' angeordnet. An diese angeschlossen, stellt eine dreiadrige Verbindungsleitung 122a, 122b und 122c eine Verbindung zu einer vom Heizkörper 110 entfernt angeordneten Schaltungsanordnung 116 her. Die Schaltungsanordnung 116, welche zum Beispiel wiederum ein Schnurzwischenschalter ist, ist mit den Anschlusskontakten 118a und 118b einer Spannungsversorgung verbunden.

Alternativ kann die Verbindungsleitung 122 direkt, ohne Steckverbindung, an der Anschlussplatte 123 angebracht sein.

Der Anschlusskontakt A' ist mit dem ersten Widerstands-Heizdraht 111a verbunden. Der Anschlusskontakt B' ist über ein Sicherungselement 114 mit dem zweiten Widerstands-Heizdraht 112b des zweiten Heizelements 112 und dem zweiten Widerstands-Heizdraht 111b des ersten Heizelements 111 verbunden. Der Anschlusskontakt C' ist mit dem ersten Widerstands-Heizdraht 112a des zweiten Heizelements 112 verbunden.

Somit bildet der erste Widerstands-Heizdraht 111a und der zweite Widerstands-Heizdraht 111b des ersten Heizelements 111 mit dem Sicherungselement 114 eine Reihenschaltung. Ebenso bildet der erste Widerstands-Heizdraht 112a und der zweite Widerstands-Heizdraht 112b des zweiten Heizelements mit dem Sicherungselement 114 eine Reihenschaltung. Für das Sicherungselement 114 gilt im wesentlichen das für das anhand von Figur 1 beschriebene Sicherungselement 14 Gesagte.

Zwischen dem Anschlusskontakt C' und dem Anschlusskontakt B' ist eine Reihenschaltung bestehend aus einem Anzeigeelement 126, eines Widerstands R110 und dem Sicherungselement 114 angeordnet. Das Anzeigeelement 126, welches beispielsweise eine Leuchtdiode ist, gibt dem Benutzer die Information, dass die Wärmevorrichtung funktionstüchtig ist.

Die Schaltungsanordnung 116 weist eine Diodenschaltung auf, welche derart ausgebildet ist, das erste und zweite Heizelement 111 und 112 in einer ersten Schaltstufe auszuschalten, das erste Heizelement 111 in einer ersten und in einer zweiten Heizstufe zu beheizen und in einer weiteren Schaltstufe zusätzlich das zweite Heizelement 112 hinzuzuschalten. Eine derartige Anordnung ist beispielsweise für ein Wärmeunterbett geeignet, bei welchen ein dem Oberkörper eines Benutzers zugeordneter Oberteil durch das erste Heizelement 111 in zwei Heizstufen beheizt werden kann, wohingegen separat ein Fußteil, welcher durch das zweite Heizelement 112 beheizt wird, eingeschaltet werden kann.

Die Schaltungsanordnung 116 weist in einem zwischen dem ersten Versorgungsspannungsanschluss 118a und dem Anschlusskontakt A' liegenden Leitungsabschnitt eine erste Schalteinheit zum Schalten des ersten Heizelements 111 auf. Die erste Schalteinheit besteht aus einer Parallelschaltung eines ersten Schaltelements S110 im ersten Parallelzweig und einer aus einem zweiten Schaltelement S112 und einer Diode D112 gebildeten Reihenschaltung im zweiten Parallelzweig. Weiterhin weist die Schaltungsanordnung 116 in dem zwischen dem ersten Versorgungsspannungsanschluss 118a und dem Anschlusskontakt C' liegenden Leitungsabschnitt eine zweite Schalteinheit zum Schalten des zweiten Heizelements 112 auf. Die zweite Schalteinheit besteht aus einer Parallelschaltung eines dritten Schaltelements S113 im ersten Parallelzweit und einer aus dem zweiten Schaltelement S112 und einer Diode D114 gebildeten Reihenschaltung im zweiten Parallelzweig.

In der Schaltungsanordnung 116 ist weiterhin eine Schalterbeleuchtung vorgesehen, welche aus einer Reihenschaltung einer Glimmlampe 128 und eines Widerstands R120 besteht. Die Schalterbeleuchtung ist zwischen der dreistufigen Schalteinheit und dem zweiten Versorgungsspannungsanschluss 118b verschaltet.

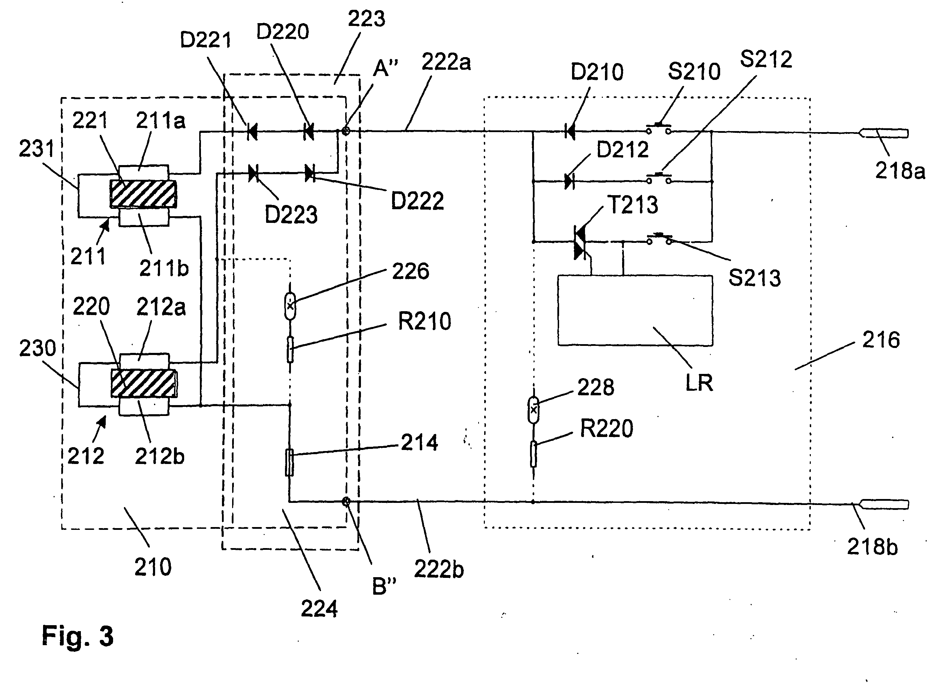

Figur 3 zeigt noch eine weitere Ausführungsform einer Wärmevorrichtung. Auf einem flexiblen Heizkörper 210 sind wiederum zwei Heizelemente 211 und 212 angeordnet. Das erste Heizelement 211 weist einen ersten Widerstands-Heizdraht 211 a und einen zweiten Widerstands-Heizdraht 211 b auf, welche durch eine schmelzfähige Zwischenisolierung 221 voneinander elektrisch getrennt sind. Der erste Widerstands-Heizdraht 211a bildet mit dem zweiten Widerstands-Heizdraht 211b eine Doppelkordel. Die freien Enden der Widerstands-Heizdrähte 211a und 211 b sind über ein Kurzschlussverbindungselement 231 bzw. direkt miteinander verbunden. Das zweite Heizelement 212 wird aus einem ersten Widerstands-Heizdraht 212a und einem zweiten Widerstands-Heizdraht 212b, welche durch eine schmelzfähige Zwischenisolierung 220 voneinander elektrisch getrennt sind, gebildet. Die beiden Widerstands-Heizdrähte 212a und 212b des zweiten Heizelements 212 bilden wiederum eine Doppelkordel. Die freien Enden der Widerstands-Heizdrähte 212a und 212b sind mit einem an der Anschlussplatte 223 gebildeten Kurzschlussverbindungselement 230 bzw. direkt miteinander verbunden.

Auf dem schmiegsamen Heizkörper 212 ist der heizkörperseitige Steckerteil einer lösbaren Steckkupplung 224 angebracht, welcher zwei Anschlusskontakte A" und B" aufweist. Alternativ kann die Verbindungsleitung 22 auch direkt an der Anschlussplatte 223 angebracht sein.

In dem Steckerteil ist ebenfalls eine Reihenschaltung aus einer Glimmlampe 226 und eines Widerstands R210 und dem Sicherungselement 214 vorgesehen.

In dem zwischen dem Anschlusskontakt A" und dem ersten Widerstands-Heizdraht 211a des ersten Heizelements 211 liegenden Leitungsabschnitt ist eine erste Diodenanordnung, bestehend aus einer Reihenschaltung zweier Dioden D220 und D221 mit gleicher Durchlassrichtung angeordnet. Die Diode D221 ist aus Gründen der Redundanz vorgesehen und kann auch weggelassen werden. In dem zwischen dem Anschlusskontakt A" und dem ersten Widerstands-Heizdraht 212b des zweiten Heizelements 212 liegenden Leitungsabschnitt ist eine zur Durchlassrichtung der ersten Diodenanordnung entgegengesetzt geschaltete zweite Diodenanordnung bestehend aus einer Reihenschaltung aus zwei Dioden D222 und D223 angeordnet. Die Diode D223 ist aus Gründen der Redundanz vorgesehen und kann auch weggelassen werden. Die erste Diodenanordnung und die zweite Diodenanordnung sind im heizkörperseitigen Steckerteil der Steckkupplung 224 untergebracht. Alternativ könnten die Diodenanordnungen auch im verbindungsleitungsseitigen Steckerteil untergebracht sein.

Es ist somit eine Reihenschaltung bestehend aus den Dioden D220 und D221, dem ersten Widerstands-Heizdraht 211a des ersten Heizelements 211, dem zweiten Widerstands-Heizdraht 211b des ersten Heizelements 211 und dem Sicherungselement 214, welches wiederum am Anschlusskontakt B" angeschlossen ist, gebildet. Andererseits besteht zwischen dem Anschlusskontakt A" und dem Anschlusskontakt B" eine weitere Reihenschaltung bestehend aus den zu der Durchlassrichtung der ersten Dioden D220 und D221 entgegengesetzt geschalteten Dioden D222 und D223, dem ersten Widerstands-Heizdraht 212a des zweiten Heizelements 212, dem zweiten Widerstands-Heizdraht 212b des zweiten Heizelements 212 und dem Sicherungselement 214.

Die Verbindung zwischen den Anschlusskontakten A" und B" und der entfernt angeordneten Schaltungsanordnung 216 stellt eine zweiadrige Verbindungsleitung 222a und 222b her. Die Schaltungsanordnung 216 ist wiederum mit einer Spannungsversorgung 218a und 218b verbunden.

Die Schaltungsanordnung 216 weist in dem zwischen dem ersten Versorgungsspannungsanschluss 218a und dem Anschlusskontakt A" liegenden Leitungsabschnitt eine zweistufige Schalteinheit auf. Diese Schalteinheit besteht aus einer Parallelschaltung einer aus einem ersten Schaltelement S210 und einer ersten Diode D210 gebildeten Reihenschaltung im ersten Parallelzweig und einer aus einem zweiten Schaltelement S212 und einer zur ersten Diode D210 antiparallel geschalteten zweiten Diode D212 gebildeten Reihenschaltung im zweiten Parallelzweig. Eine zusätzliche dritte Schaltstufe der Schalteinheit wird durch einen dritten Parallelzweig gebildet, welcher aus einer Reihenschaltung eines dritten Schaltelements S213 und eines mit einer Leistungsreduzierungsstufe LR verschalteten Triacs bzw. Zweiweg-Tyristors T213 aufgebaut ist.

Die Ansteuerung der beiden Heizelemente 211 und 212 bei 2-adriger Anschlussleitung 222a und 222b erfolgt mittels Trennung der Netzhalbwellen durch Dioden.

In einer ersten Schaltstufe ist das Schaltelement S212 geschlossen, so dass die negative Netzhalbwelle für die Fußteil-Beheizung, d. h. für die Beheizung des zweiten Heizelements 212 wirksam wird. In einer zweiten Schaltstufe sind die Schaltelemente S210 und S212 geschlossen, so dass sowohl die positive als auch negative Netzhalbwelle für die Oberteil-Beheizung, d. h. die Beheizung des ersten Heizelements 211 und für die Fußteil-Beheizung, d. h. für die Beheizung des zweiten Heizelements 212 wirksam wird. In einer dritten Schaltstufe ist das Schaltelement S213 geschlossen. Durch den Triac T213, welcher mit einer Leistungsreduzierungsstufe LR verschaltet ist, wird eine getaktete positive und negative Halbwelle für die Leistungsreduzierung der Oberteil- und Fußteil-Heizung, d. h. für die Beheizung des ersten Heizelements 211 und des zweiten Heizelements 212 verwendet.

Zwischen der Schalteinheit 216 und dem zweiten Versorgungsspannungsanschluss 218b ist eine Reihenschaltung bestehend aus einer Glimmlampe 228 und eines Widerstands R220 verschaltet, welche der Schalterbeleuchtung dient.

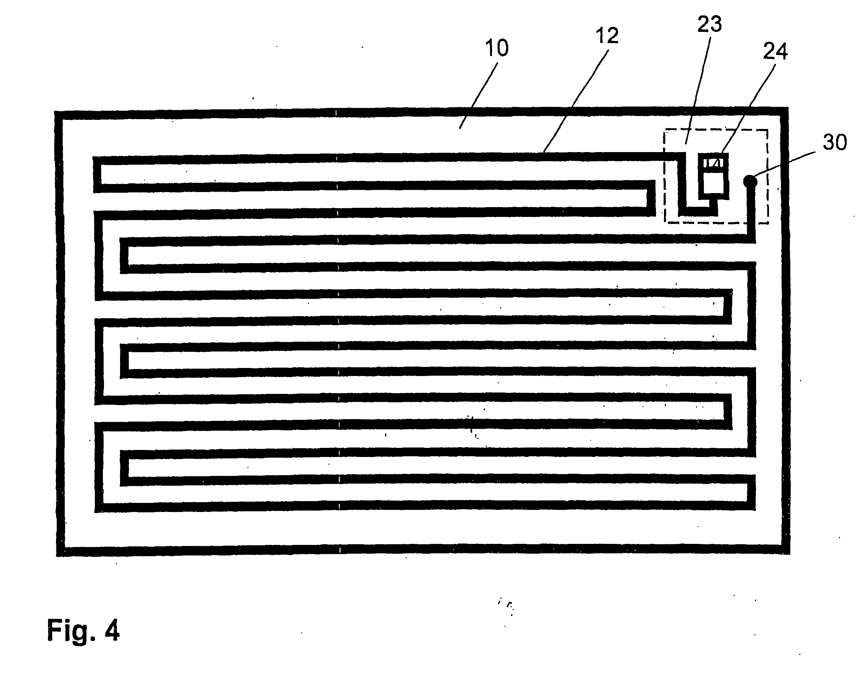

Figur 4 zeigt eine schematische Draufsicht eines mit einem Heizelement versehenen Heizkörpers wie es beispielsweise bei der in Figur 1 gezeigten ersten Ausführungsform verwendet werden kann. Auf dem schmiegsamen Heizkörper 10 ist der heizkörperseitige Steckerteil der lösbaren Steckkupplung 24 angeordnet. Dieser heizkörperseitige Steckerteil beinhaltet auch das (nicht gezeigte) Sicherungselement 14 gemäß Figur 1. Das als Doppelkordel ausgebildete Heizelement 12 ist im wesentlichen mehrfach gewunden auf dem Heizkörper 10 angeordnet, wobei parallel zueinander verlaufende Doppelkordelbereiche gebildet sind. Innerhalb jeder Doppelkordel verläuft die Stromflussrichtung zwischen der inneren und der äußeren Drahtwicklung gegensinnig. Dadurch werden zwei gegensinnige sich gegenseitig nahezu aufhebende elektromagnetische Felder erzeugt.

Das Heizelement 12 ist auf dem Heizkörper 10 aufgeklebt und zusätzlich mit dem an der Oberfläche aufgebrachten Textilgewebe versteppt. Auch kann das Heizelement 12 nur durch die Versteppung gehalten werden.

Eine derartige Anordnung der Heizkordeln trägt zur Betriebssicherheit bei, da bei unsachgemäßen Gebrauch durch den Benutzer üblicherweise zwei bis drei benachbarte Heizkordelstränge überhitzt werden. Eine Faltung im Heizkörper führt bedingt durch eine erhöhte Leistung auf kleiner Fläche zu hohen Temperaturen und damit zu einem Ansprechen des Sicherheitssystems. Um eine rasche Abschaltung des Sicherheitssystem zu erlangen, ist es erforderlich, dass das Doppelkordelende mit dem Kurzschluss möglichst nahe bei dem entgegengesetzten Ende der Doppelkordel (benachbart) verlegt wird. Um Doppelkordel-Kreuzungen im Heizkörper zu vermeiden (die selbst zum Auslösen des Sicherheitssystem führen können), eignet sich vor allem eine Art "Pfeifenverlegung", wie sie in den Figuren 4 bis 6 dargestellt ist.

Die freien Enden des als Doppelkordel ausgebildeten Heizelements 12 sind mit einem Kurzschlussverbindungselement 30, wie bereits in Figur 1 gezeigt, versehen. In dem dargestellten Ausführungsbeispiel ist das Kurzschlussverbindungselement 30 auf der Anschlussplatte 23 angeordnet. Das Kurzschlussverbindungselement 30 kann in einer alternativen Anordnung jedoch aus dem Heizkörper herausgeführt und beispielsweise in der Steckkupplung untergebracht sein. Auch ist es möglich, dass das Heizelement 12 derart verlegt ist, dass das freie Ende an einer beliebigen Stelle auf dem Heizkörper endet und das Kurzschlussverbindungselement 30 an diesem freien Ende vorgesehen ist.

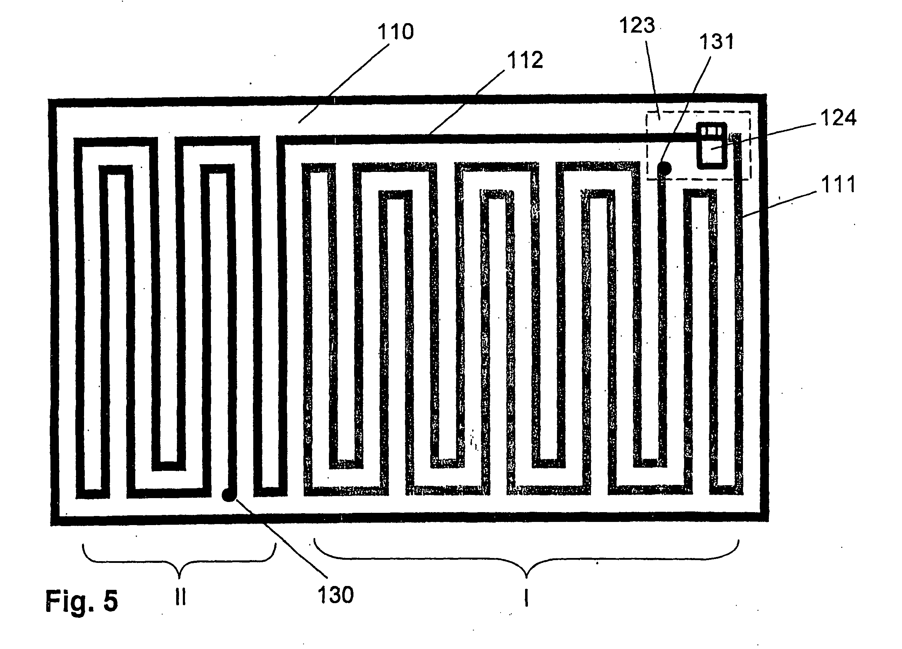

Anhand von Figur 5 wird ein weiteres Verlegeschema für Heizelemente beschrieben, wie es beispielsweise für eine Wärmevorrichtung gemäß Figur 2 angewendet sein kann. Auf dem schmiegsamen Heizkörper 110 ist ein heizkörperseitiges Steckerteil einer Steckkupplung 124 angebracht, in welchem das (nicht gezeigte) Sicherungselement 114 untergebracht ist. Das erste Heizelement 111, welches als eine erste Doppelkordel ausgebildet ist, ist in einem ersten Heizbereich I auf dem Heizkörper 110 angeordnet, und bildet einen beheizbaren Oberteil, welcher dem Oberkörper eines Benutzers zugeordnet ist. Das zweite Heizelement 112, welches ebenfalls als Doppelkordel ausgebildet ist, ist in einem vom ersten Heizbereich getrennten zweiten Heizbereich II auf dem Heizkörper 110 angeordnet. Die freien Enden der Doppelkordeln 111 und 112 sind durch Kurzschlussverbindungselemente 131 bzw. 130 miteinander verbunden. Das Kurzschlusselement131 ist im gezeigten Ausführungsbeispiel an der Anschlussplatte 123 fixiert. Der zweite Heizbereich II bildet einen beheizbaren Fußteil. Die Doppelkordel 111 und die Doppelkordel 112 sind im wesentlichen mehrfach gewunden auf dem Heizkörper 110 angeordnet, wobei parallel zueinander verlaufende Doppelkordelbereiche gebildet sind. Innerhalb jeder Doppelkordel verläuft die Stromflussrichtung zwischen der inneren und der äußeren Drahtwicklung gegensinnig, wobei zwei gegensinnige sich gegenseitig nahezu aufhebende elektromagnetische Felder erzeugt werden. In dem in Figur 5 gezeigten Verlegeschema der Heizelemente erstrecken sich die parallel zueinander verlaufenden Doppelkordelbereiche im wesentlichen senkrecht zur Längserstreckungsrichtung des Heizkörpers 110.

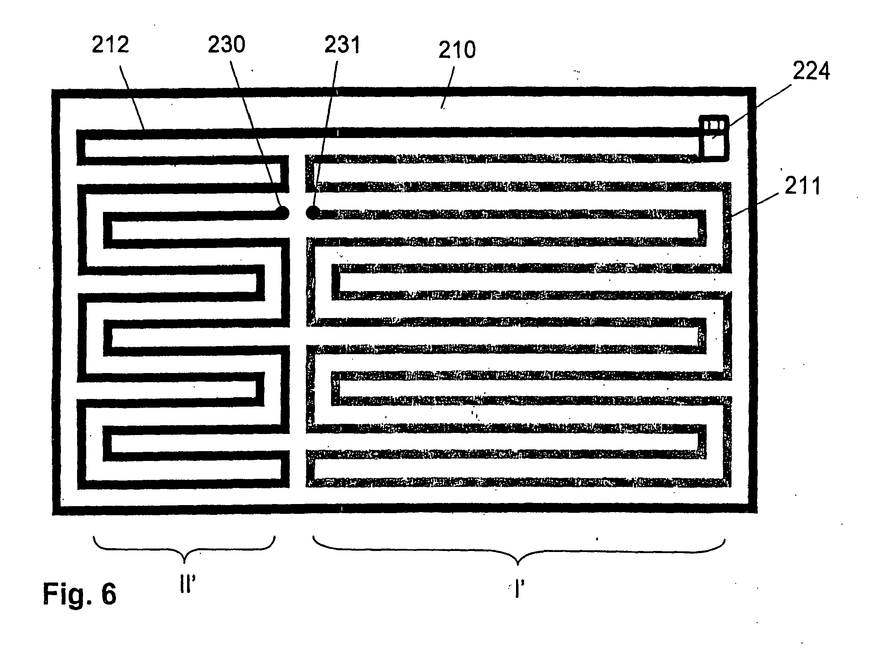

Anhand von Figur 6 wird nachfolgend das Verlegeschema für Heizelemente beschrieben, wie es beispielsweise für eine Wärmevorrichtung gemäß Figur 3 Anwendung finden kann. Auf einem schmiegsamen Heizkörper 210 ist ein heizkörperseitiger Steckerteil einer Steckkupplung 224 angeordnet, in welchem auch das (nicht gezeigte) Sicherungselement 214 angeordnet ist. Das erste Heizelement 211 ist als Doppelkordel ausgebildet, deren freie Enden mittels eines Kurzschlussfindungselements 231 miteinander verbunden sind. Die erste Doppelkordel 211 ist in einem ersten Heizbereich I' auf dem Heizkörper 210 angeordnet, und bildet einen beheizbaren Oberteil. Das zweite Heizelement 212 ist ebenfalls als Doppelkordel ausgebildet, deren freie Enden durch ein Kurzschlussverbindungselement 230 miteinander verbunden sind. Die zweite Doppelkordel ist in einem vom ersten Heizbereich getrennten zweiten Heizbereich II' auf dem Heizkörper 210 angeordnet und bildet einen beheizbaren Fußteil. Die Doppelkordel 211 und die Doppelkordel 212 sind im wesentlichen mehrfach gewunden auf dem Heizkörper 210 angeordnet, wobei parallel zueinander verlaufende Doppelkordelbereiche gebildet sind. Innerhalb jeder Doppelkordel verläuft die Stromflussrichtung zwischen der inneren und der äußeren Drahtwicklung gegensinnig, so dass zwei gegensinnige sich gegenseitig nahezu aufhebende elektromagnetische Felder erzeugt werden.

Zusätzlich zu den vorstehend beschriebenen Verlegearten der Heizelemente 12, 111, 112, 211 und 212 kann jede andere Verlegeart zum Einsatz kommen. Insbesondere kann die Verlegung der Form des Heizkörpers angepasset werden, wie dies beispielweise bei Heizteppichen, Fußwärmern oder Heizdecken der Fall sein kann, Dabei können auch dreieckige oder spiralförmige Verlegeschemen realisiert werden. Auch können die Heizelemente auf dem Heizkörper zumindest bereichsweise enger aneinander oder weiter auseinander verlaufend verlegt werden, wobei eine Körpergerechte Wärmeverteilung erreicht werden kann.

Figur 7 zeigt eine Anschlussplatte 23, an welche, wie bereits anhand der Figur 1 kurz erläutert, die zweiadrige Verbindungsleitung 22a, 22b mit dem einzigen Heizelement 12 verbunden ist. Die Anschlussplatte 23 weist eine starr oder auch flexibel ausgebildete Trägerplatte 21 auf. Die beiden Enden des Heizelements 12 sind derart abisoliert, dass zum einen der Innenleiter 12a und zum anderen der Außenleiter 12b abschnittweise freigelegt sind. An dem einen Ende des Heizelements 12 sind der abisolierte Teil des Innenleiters 12a mit einem Klemmelement 21a und der abisolierte Teil des Außenleiters mit einem Klemmelement 21 b an der Trägerplatte 21 fixiert. An dem anderen Ende des Heizelements 12 sind der abisolierte Teil des Innenleiters 12a mit einem Klemmelement 21d und der abisolierte Teil des Außenleiters mit einem Klemmelement 21c an der Trägerplatte 21 fixiert. Die Klemmelemente 21a, 21b, 21c und 21d bestehen aus einem elektrisch leitenden Metall, welches derart ausgeformt ist, dass die abisolierten Innen- bzw. Außenleiter der Heizelements 12 darin aufgenommen sind. Durch mechanisches Verbiegen der Klemmelemente 21a, 21b, 21c und 21d werden die abisolierten Innen- bzw. Außenleiter der Heizelements 12 fixiert. Auf diese Weise wird eine so genannte Crimp-Verbindung gebildet.

Die Klemmelemente 21a, 21b, 21c und 21d sind an der Trägerplatte 21 derart angebracht, dass sie durch diese hindurchreichen, wobei an der (nicht gezeigten) Unterseite der Trägerplatte 21 Kontakte hervorstehen.

Das Sicherungselement 14 ist an der Trägerplatte 21 derart angebracht, dass dessen beide Anschlusskontakte ebenfalls durch die Trägerplatte 21 hindurchreichen, so dass an der (nicht gezeigten) Unterseite der Trägerplatte 21 die Enden der Anschlusskontakte hervorstehen.

In ähnlicher Weise sind die zwei Adern 22a und 22b der Verbindungsleitung an der Trägerplatte 21 angebracht, wobei deren Enden durch die Trägerplatte 21 hindurchreichen, so dass an der (nicht gezeigten) Unterseite der Trägerplatte 21 diese ebenfalls hervorstehen.

In einer (nicht gezeigten) alternativen Ausführungsform ist sowohl das Heizelement 12 bzw. die jeweiligen Enden des Innenleiters 12a und des Außenleiters 12b als auch die Adern 22a und 22b der Verbindungsleitung und das Sicherungselement 14 mittels Löten, Widerstandsschweißen, Ultraschallschweißen oder dergleichen Verbindungstechnik an der Trägerplatte 21 befestigt.

An der (nicht gezeigten) Unterseite der Trägerplatte 21 sind die hervorstehenden Kontakte der Klemmelemente 21a, 21b, 21c und 21d, des Sicherungselements 14 und der beiden Adern 22a und 22b der Verbindungsleitung nach einem vorgegebene Schaltplan miteinander elektrisch leitend verbunden. Hierzu werden entweder an der Unterseite der Trägerplatte 21 angebrachte Leiterbahnen oder aber angelötete Verbindungsdrähte verwendet.

Ein Kurzschlusselement 30 ist dadurch gebildet, dass die Kontakte der Klemmelemente 21c und 21d und somit der Innenleiter 12a und der Außenleiter 12b des Heizelements 12 miteinander elektrisch leitend verbunden sind.

Die Anschlussplatte 23 ist gegen die Umgebung elektrisch isoliert. Dies kann dadurch realisiert sein, dass die Anschlussplatte 23 mit allen Anschlüssen in ein Isoliermaterial eingegossen bzw. mit einem solchen umspritzt wird. Auch kann die Anschlussplatte 23 mit allen Anschlüssen in ein (nicht gezeigtes) Gehäuse eingekapselt werden, bei welchem auf ein Grundelement ein Deckel aufgesetzt wird. Das Gehäuse kann zusätzlich isoliert sein, um eine erhöhte Feuchtigkeitsdichtigkeit zu erreichen.

Eine entsprechend abgewandelte Anschlussplattenlösung ist für den Anschluss einer zweiadrigen Verbindungsleitung 122a, 122b oder dreiadrigen Verbindungsleitung 222a, 222b, 222c mit zwei getrennt schaltbaren Heizelementen 111, 112 bzw. 211, 212, wie anhand der Figuren 2 bzw. 3 erläutert, leicht möglich.

## Patentansprüche

1. Elektrisch beheizbare Wärmevorrichtung mit einem schmiegsamen Heizkörper (10; 110; 210) und mindestens einem darauf angeordneten Heizelement (12; 111, 112; 211, 212), wobei jedes Heizelement zwei durch eine schmelzfähige Zwischenisolierung (20; 120, 121; 220, 221) voneinander elektrisch getrennte Widerstands-Heizdrähte (12a, 12b; 111a, 111b, 112a, 112b; 211a, 211b; 212a, 212b) aufweist und über mindestens ein Sicherungselement (14; 114; 214) mittels einer Verbindungsleitung (22a, 22b; 122a, 122b, 122c; 222a, 222b) mit einer vom Heizkörper (10; 110; 210) entfernt angeordneten Schaltungsanordnung (16; 116; 216) zum Anschluss an eine Spannungsversorgung (18a, 18b; 118a, 118b; 218a, 218b) verbunden ist; wobei die zwei Widerstands-Heizdrähte (12a, 12b; 111a, 111b, 112a, 112b; 211a, 211b; 212a, 212b) jedes Heizelements (12; 111, 112; 11, 212) sind mit dem Sicherungselement (14; 114; 214) in Reihe geschaltet,
**dadurch gekennzeichnet, dass** auf dem Heizkörper (10; 110; 210) eine Anschlussplatte (23; 123; 223) zum elektrischen Verbinden des mindestens einen Heizelements (12; 111, 112; 211, 212) mit der Verbindungsleitung (22) und auf der Anschlussplatte (23; 123; 223) das mindestens eine Sicherungselement (14; 114; 214) angeordnet sind.

2. Wärmevorrichtung nach Anspruch 1,
**dadurch gekennzeichnet, dass**
die Anschlussplatte (23) eine Trägerplatte (21), an der die zwei Widerstands-Heizdrähte (12a, 12b) jeweils mittels an der Trägerplatte (21) angebrachten elektrisch leitenden Klemmelementen (21a, 21b, 21,c, 21d) fixiert und kontaktiert sind, und Leitungselemente aufweist, welche eine elektrisch leitende Verbindung zwischen den Widerstands-Heizdrähten (12a, 12b), dem Sicherungselement (14) und den Adern (22a, 22b) der Verbindungsleitung (22) herstellen.

## Claims

1. An electrically heatable heating apparatus, comprising flexible heating body (10; 110; 210) and at least one heating element (12; 111, 112; 211, 212) arranged thereon, with each heating element comprising two resistance heating wires (12a, 12b; 111a, 111b, 112a, 112b; 211a, 211b; 212a, 212b) which are electrically separated from one another by a meltable intermediate insulation (20; 120, 121; 220, 221) and being connected via at least one fuse element (14; 114; 214) by means of a connecting line (22a, 22b; 122a, 122b, 122c; 222a, 222b) with a circuit arrangement (16; 116; 216) which is arranged remote from the heating body (10; 110; 210) for connection to a voltage supply (18a, 18b; 118a, 118b; 218a, 218b), with the two resistance heating wires (12a, 12b; 111a, 111b, 112a, 112b; 211a, 211b; 212a, 212b) of each heating element (12; 111, 112; 211, 212) being connected in series with the fuse element (14; 114; 214), **characterized in that** a connection plate (23; 123, 223) for electrically connecting the at least one heating element (12; 111, 112; 211, 212) with the connection line (22) is arranged on the heating body (10; 110; 210) and the at least one fuse element (14; 114; 214) on the connection plate (23; 123; 213).

2. A heating apparatus according to claim 1, **characterized in that** the connection plate (23) comprises a support plate (21), to which the two resistance heating wires (12a, 12b) are each fixed and make contact by means of electrically conducive clamping elements (21 a, 21 b, 21 c, 21 d) attached to the support plate (21), and line elements which produce an electrically conducive connection between the resistance heating wires (12a, 12b), the fuse element (14) and the leads (22a, 22b) of the connection line (22).

## Revendications

1. Dispositif thermique pouvant être chauffé électriquement avec un corps chauffant enveloppant (10 ; 110 ; 210) et au moins un élément chauffant (12 ; 111, 112; 211, 212) disposé sur celui-ci, dans lequel chaque élément chauffant présente deux fils chauffants à résistance (12a, 12b ; 111 a, 111 b, 112a, 112b ; 211a, 211b ; 212a, 212b) séparés électriquement l'un de l'autre par une isolation intermédiaire fusible (20 ; 120, 121 ; 220, 221) et est relié par l'intermédiaire d'au moins un élément de fusible (14 ; 114 ; 214) au moyen d'une ligne de liaison (22a, 22b ; 122a, 122b, 122c; 222a, 222b) avec un dispositif de commutation (16 ; 116 ; 216) disposé à distance du corps chauffant (10 ; 110 ; 210) pour le raccordement à une alimentation électrique (18a, 18b ; 118a, 118b ; 218a, 218b) ;
dans lequel les deux fils chauffants à résistance (12a, 12b ; 111a, 111b, 112a, 112b ; 211a, 211b ; 212a, 212b) de chaque élément chauffant (12 ; 111, 112 ; 11, 212) sont montés en série avec l'élément de fusible (14 ; 114 ; 214) ;
**caractérisé en ce qu'**une plaque de raccordement (23 ; 123 ; 223) est disposée sur le corps chauffant (10 ; 110; 210) pour la liaison électrique de l'au moins un élément chauffant (12 ; 111, 112 ; 211, 212) à la ligne de liaison (22) et l'au moins un élément de fusible (14 ; 114 ; 214) est disposé sur la plaque de raccordement (23 ; 123 ; 223).

2. Dispositif chauffant selon la revendication 1, **caractérisé en ce que** la plaque de raccordement (23) présente une plaque de support (21) sur laquelle les deux fils chauffants à résistance (12a, 12b) sont fixés et mis en contact chacun au moyen d'éléments de serrage (21a, 21b, 21,c, 21d) conducteurs électriques disposés sur la plaque de support (21), ainsi que des éléments de ligne qui établissent une liaison électriquement conductrice entre les fils chauffants à résistance (12a, 12b), l'élément de fusible (14) et les conducteurs (22a, 22b) de la ligne de liaison (22).
